# EUROPEAN PATENT APPLICATION

(11) **EP 1 672 193 A1**
(43) Date of publication of application: **21.06.2006**
(21) Application number: 04030229.1
(22) Date of filing: 20.12.2004
(51) Int. Cl.: F01N 3/30

(54) **Secondary air introducing structure for vehicles**

(71) Applicant: Kwang Yang Motor Co., Ltd., San-Min Dist., Kaohsiung City (TW)
(72) Inventor: Su, Wen-Mung, San-Min District Kaohsiung City (TW); Lan, Tzu-Jung, San-Min District Kaohsiung City (TW); Luo, Ao-Hsing, San-Min District Kaohsiung City (TW)
(74) Representative: Horak, Michael

(57) **Abstract**

A secondary air introducing structure (3) for a vehicle (2) having an engine provided with an inlet pipe (33) for guiding air from outside into an exhaust device (24) of the engine via a pipe (31), characterized in that a front end of the inlet pipe (33) is connected to an inlet box (13) and the inlet pipe (33) is connected to the pipe (31), whereby it is relatively difficult for dust and water to entering into the secondary air can (32) via the pipe (33), the secondary air is filtered by the secondary air can (32) and passed through the one-way valve (30) to enter into the exhaust device (24) of the engine where the exhaust gas is burnt again thereby decreasing the pollution of the exhaust gas from the engine and therefore prolonging the service life of the secondary air can (32).

## Description

### BACKGROUND OF THE INVENTION

### (a) Technical Field of the Invention

This invention is related to a secondary air introducing structure, and in particular to the structure of a secondary air introducing pipe for vehicles in order to increase the capability of preventing dust and water from entering therein.

### (b) Description of the Prior Art

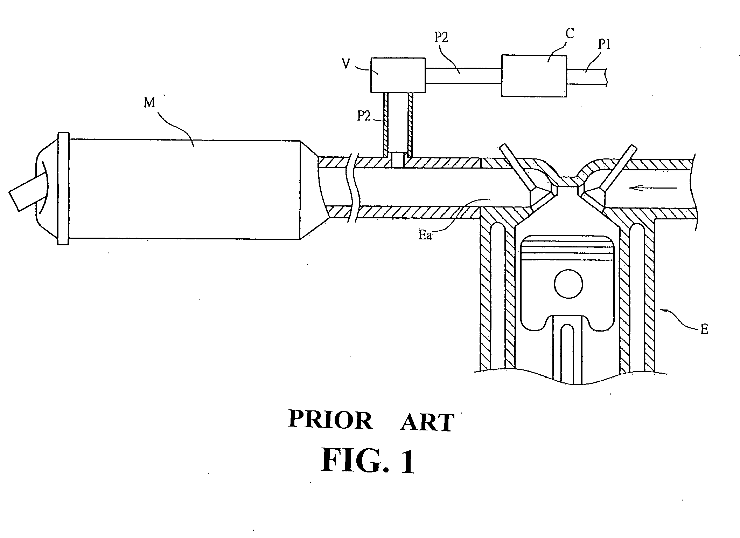

It is well known that power of vehicles comes from fuel gas which is a mixture of outside fresh air and fuel and introduced into an engine E for combustion (see FIG 1). However, the fuel gas cannot be burnt thoroughly within the engine and so the remaining fuel gas will be exhausted through the exhaust arrangement. The exhaust arrangement is constituted by the exhaust passage Ea and the exhaust pipe M. Since the exhaust gas contains the remaining fuel gas, the pollution of the exhaust gas will be increased. Hence, it has been proposed to introduce secondary air into the exhaust arrangement of the engine E. As shown in FIG 1, the secondary air is first introduced through a pipe P1 to a secondary air can C having at least a filter for filtration and then passed into the exhaust pipe M (or the exhaust passage Ea) via a pipe P2 and a one-way valve V The one-way valve V is used for preventing exhaust gas from entering into the secondary air can C from the exhaust pipe M. After the secondary air is introduced into the exhaust pipe M, the exhaust gas will be burnt again thereby lowering the pollution of the exhaust gas. Nevertheless, whether the secondary air can be normally introduced or whether the secondary air can is capable of being normally operated depends on the arrangement of the secondary air inlet.

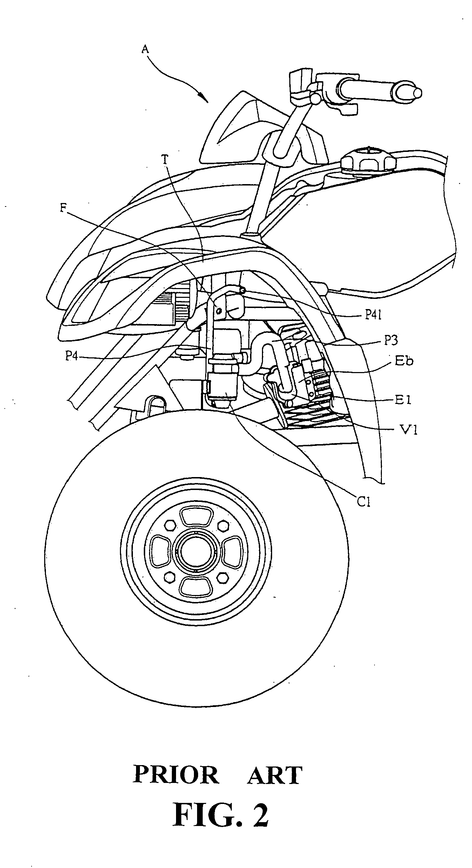

As shown in FIG 2, the prior art secondary air arrangement for an all terrain vehicle A comprises a one-way valve V 1 which is installed on a mounting plate Eb of the engine E1 for preventing exhaust gas from entering into the secondary air can C1. The one-way valve V 1 is connected with the secondary air can C 1 via a pipe P3. The other end of the secondary air can C 1 is connected to a pipe P4 having an inlet P41 which is mounted on a frame F under the front shoulder T. However, the inlet P41 is exposed to the air and all terrain vehicles often travel in areas with water and dust such as seaside or mountain thereby easily causing a lot of water and dust to enter into the secondary air can C 1 and therefore causing damage to the secondary air can C 1. Accordingly, the secondary air cannot be introduced into the exhaust pipe M or exhaust passage Ea for enabling the remaining fuel gas to burn again.

Therefore, it is an object of the present invention to provide a secondary air introducing structure for vehicles which can obviate and mitigate the above-mentioned drawbacks.

### SUMMARY OF THE INVENTION

The primary purpose of the present invention is to provide a secondary air introducing structure for a vehicle having an engine provided with an inlet pipe for guiding air from outside into an exhaust device of the engine via a pipe, characterized in that a front end of the inlet pipe is connected to an inlet box and the inlet pipe is connected to the pipe, whereby it is relatively difficult for dust and water to enter into the secondary air can via the pipe, the secondary air is filtered by the secondary air can and passed through the one-way valve to enter into the exhaust device of the engine where the exhaust gas is burnt again thereby decreasing the pollution of the exhaust gas from the engine and therefore prolonging the service life of the secondary air can.

This invention is related to a secondary air introducing structure for vehicles in order to increase the capability of preventing dust and water from entering therein.

The foregoing object and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 illustrates the structure of a prior art engine;
FIG 2 illustrates a prior art secondary air arrangement for all terrain vehicles;
FIG 3 illustrates an all terrain vehicle provided with a secondary air arrangement according to the present invention;
FIG 4 is a perspective view of a transmission case according to the present invention;
FIG 5 is a sectional view of a secondary air can according to the present invention;
FIG 6 illustrates an all terrain vehicle provided with a secondary air arrangement according to another preferred embodiment of the present invention;
FIG 7 illustrates a scooter provided with a secondary air arrangement according to the present invention; and
FIG 8 is a schematic view of the secondary air arrangement viewed from one side of FIG 7.

### DETAILED DESCRIPTION OF THE PREFERRED EMBODIMENTS

The following descriptions are of exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

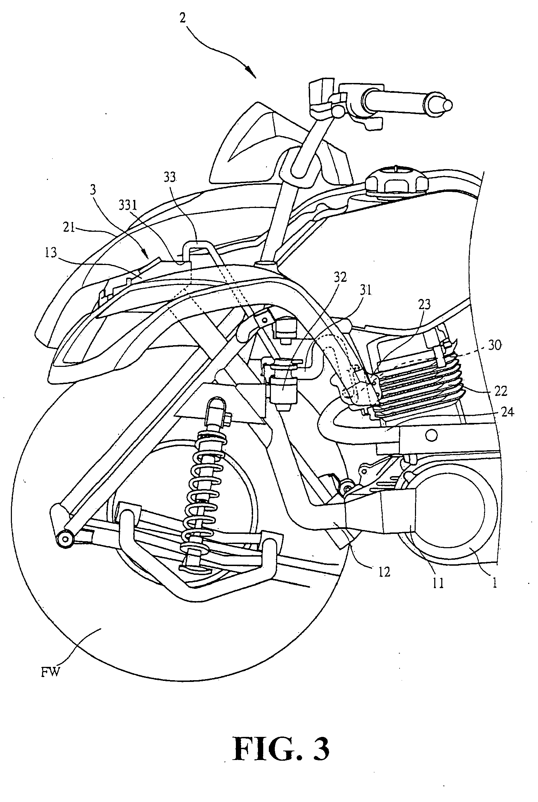

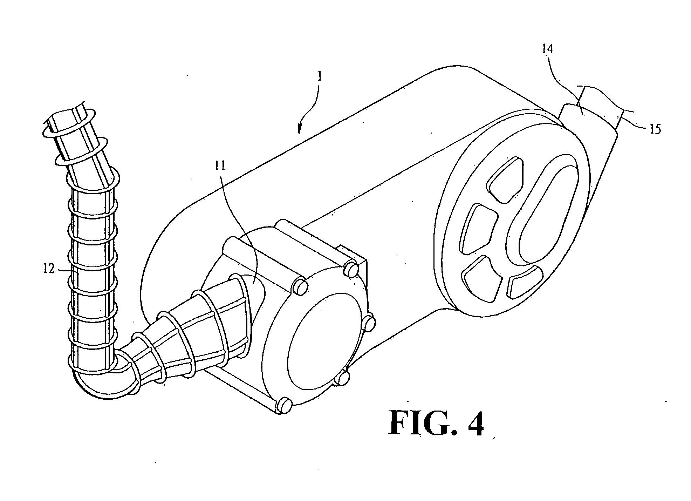

Referring to FIG 3, the all terrain vehicle 2 comprises an engine 22 having an exhaust device constituted by an exhaust route (not shown) and an exhaust pipe 24. Secondary air is introduced into the exhaust route (not shown) or the exhaust pipe 24. The front end of the transmission case 1 of the all terrain vehicle 2 has an air inlet 11 connected to an air inlet box 13 via an inlet pipe 12. The rear end of the transmission case 1 is provided with an air outlet 14 connected with an outlet pipe 15 (see FIG 4). The belt driving mechanism (not shown) in the transmission case 1 operates at high speed and produces high temperature in operation. The air inlet box 13 is used for guiding cool air from outside into the transmission case 1 via the inlet pipe 12 and the air inlet 11 to cool down the belt driving mechanism and then out of the outlet 14 and the outlet pipe 15. When the transmission case 1 is to be used on an all terrain vehicle 2 (see FIG 3), the inlet box 13 is fixedly mounted under the front cover 21 of the all terrain vehicle 2 in order to prevent dust and water from entering into the transmission case 1 to cause damage. The secondary air introducing structure 3 according to the present invention utilizes a mounting plate 23 to install a one-way valve 30 on the engine 22. The one-way valve 30 is connected to a secondary air can 32 via a pipe 31. The secondary air can 32 is an air cleaner 32 which is connected at the other end with a pipe 33 having an inlet 331. The inlet 331 of the pipe 33 is connected to the inlet box 13 of the transmission case 1. Since the inlet box 13 is mounted under the front cover 21 and above the front wheels of the all terrain vehicle 2, it will be relatively difficult for dust and water to reach thereby preventing dust and water from entering into the secondary air can 32 and therefore increasing dust and water prevention capability of the secondary air can 32 and prolonging the service life of the secondary air can 32.

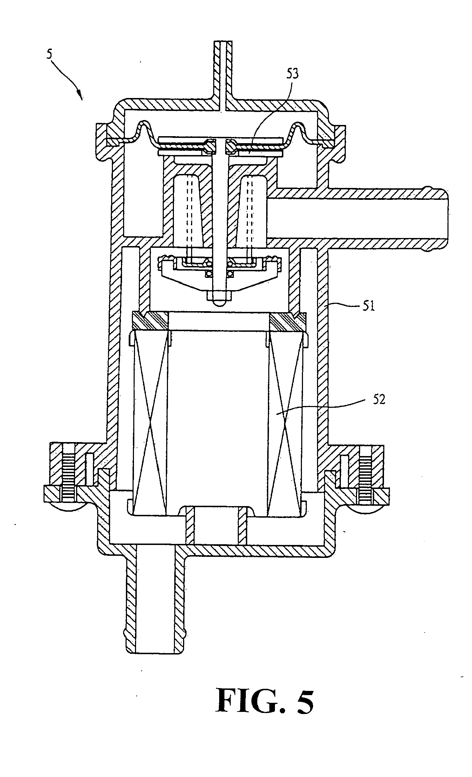

Referring to FIG 5, the secondary air can may be replaced with a secondary air supplier 5 comprising a housing 51 in which is mounted a filter 52 and a control valve 53.

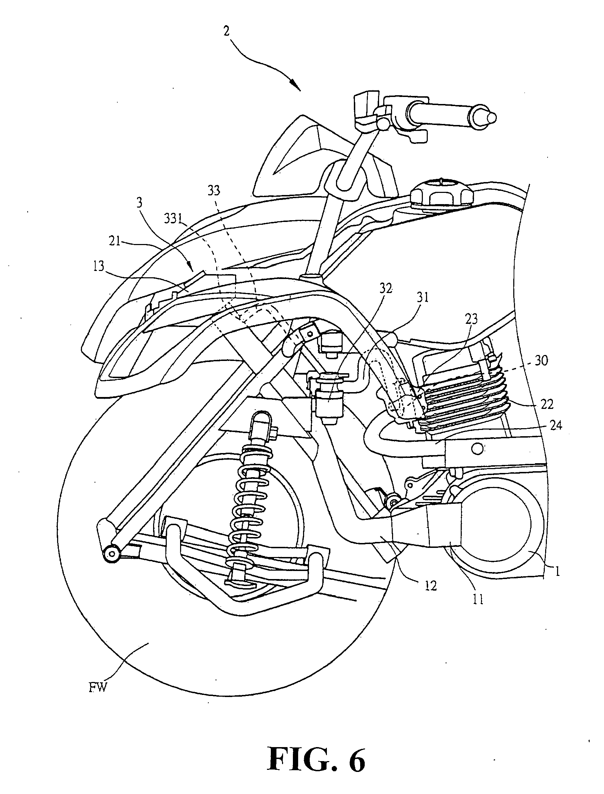

As shown in FIG 6, the pipe 33 may be directly connected to the inlet pipe 12 of the transmission case 1 and the inlet 331 of the pipe 33 is mounted close to the inlet box 13 and located higher than the secondary air can 32 thereby also achieving the purpose of increasing the dust and water prevention capability of the secondary air can 32.

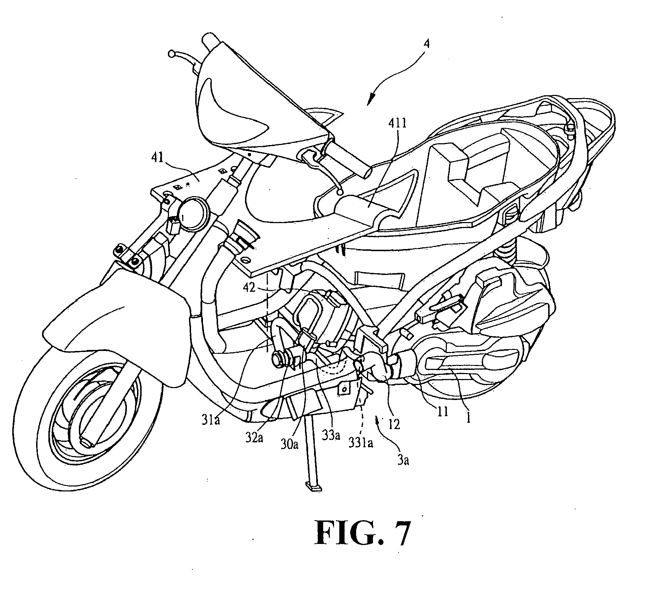

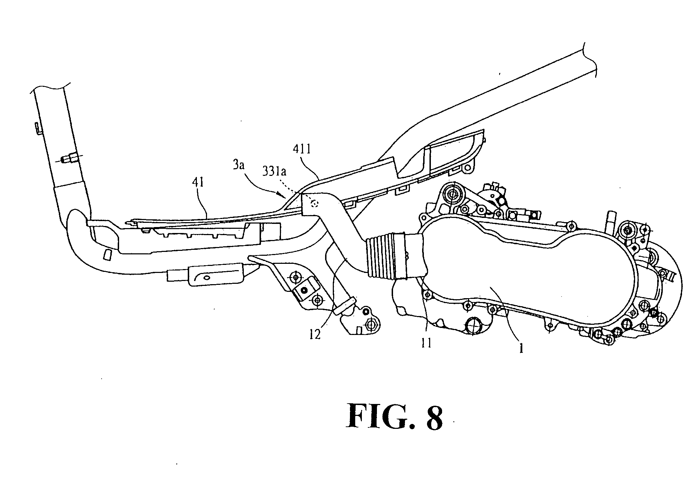

FIGS. 7 and 8 illustrate the arrangement of the transmission case 1 on a scooter 4. In order to prevent dust and water from entering into the transmission case 1 via the inlet pipe 12 to cause damage to the belt driving mechanism, the inlet pipe 12 of the transmission case 1 is fixedly mounted under the projection 411 of the foot supporting board 41 thereby enabling the transmission case 1 to receive cleaner cool air. The secondary air guiding structure 3a comprises a one-way valve 30a mounted on the exhaust device (not shown) of the engine 42 of the scooter 4. The one-way valve 30a is connected to secondary air can 32a via a pipe 31 a. The other end of the secondary air can 32a is connected with a pipe 33a having an inlet 331a which is in turn connected to the inlet pipe 12of the transmission case 1 thereby preventing dust and water from entering into the secondary air can 32a via the pipe 33a.

The present invention mainly utilizes the pipes 33 and 33a to connect to the inlet box 13 or the inlet pipe 12 of the transmission case 1 thereby preventing dust and water from entering into the secondary air can via the pipe 33 or 33a. Then, the secondary air is filtered by the secondary air can 32 or 32a and passed through the one-way valve 30 or 30a to enter into the exhaust device of the engine 22 or 42 where the exhaust gas is burnt again thereby decreasing the pollution of the exhaust gas from the engine 22 or 42 and therefore prolonging the service life of the secondary air can 32 or 32a.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

**1.** A secondary air introducing structure for a vehicle having an engine provided with an inlet pipe for guiding air from outside into an exhaust device of said engine via a pipe, **characterized in that** a front end of said inlet pipe is connected to an inlet box and said inlet pipe is connected to said pipe.

**2.** The secondary air introducing structure for a vehicle as claimed in claim 1, wherein said pipe is connected to a secondary air can which is an air cleaner.

**3.** The secondary air introducing structure for a vehicle as claimed in claim 1, wherein said pipe is connected to a secondary air can which is a secondary air supplier having a control valve and a filter.

**4.** The secondary air introducing structure for a vehicle as claimed in claim 1, wherein secondary air is guided into an exhaust pipe.

**5.** A secondary air introducing structure for a vehicle having an engine provided with an inlet pipe for guiding air from outside into an exhaust device of said engine via a pipe, **characterized in that** said inlet pipe is connected to said pipe.

**6.** The secondary air introducing structure for a vehicle as claimed in claim 5, wherein said pipe is connected to a secondary air can which is an air cleaner.

**8.** The secondary air introducing structure for a vehicle as claimed in claim 5, wherein said pipe is connected to a secondary air can which is a secondary air supplier having a control valve and a filter.

**9.** The secondary air introducing structure for a vehicle as claimed in claim 5, wherein secondary air is guided into an exhaust pipe.

**10.** The secondary air introducing structure for a vehicle as claimed in claim 5, wherein said pipe has an inlet close to said inlet box.
